# EUROPEAN PATENT APPLICATION

(11) **EP 2 639 901 A1**
(43) Date of publication of application: **18.09.2013**
(21) Application number: 12159088.9
(22) Date of filing: 12.03.2012
(51) Int. Cl.: H02B 1/36

(54) **Draw-out switching device**

(71) Applicant: Eaton Industries (Netherlands) B.V., 7559 SC Hengelo (NL)
(72) Inventor: Everink, Jacobus, 7623 CN Borne (NL); Hoekstra, Jaap, 7544NE Enschede (NL); Geelen, Martin, 49828 Lage (DE)
(74) Representative: Tabeling, Marcella M.J.

(57) **Abstract**

The invention relates to a drawout switching device comprising:
- a base frame for arrangement in a cabinet;
- a subframe slidable arranged in the base frame and housing switching gear; wherein the subframe is positionable in at least a connected position, a test position and a disconnected position and wherein the subframe comprises at least two subframe parts, which are movable relative to each other and further comprising an operating mechanism for moving the at least two subframe parts one after the other, to arrive at the connected postion, the test position and the disconnected position.

## Description

The invention relates to a draw-out switching device comprising:
- a base frame for arrangement in a cabinet;
- a sub-frame slidable arranged in the base frame and housing switching gear; wherein the sub-frame is positionable in at least a connected position, a test position and a disconnected position.

Typical draw-out switches are used for low voltage applications such as switching pumps and electric motors. The draw-out switching devices are arranged in a cabinet which is provided with busbars to supply power and outgoing busbars to conduct switched power to for example a pump or motor.

The switching gear of the draw-out switching devices provide for the connecting and disconnecting of the supply busbars to the outgoing busbars. This switch gear comprises safety circuitry and actuators to make or brake contact between busbars.

For maintenance and problem solving, it is necessary that the switching gear can be tested. For this purpose, the switching gear has to be disconnected from the busbars. It is also desired that in such a test position the switching gear is connected to an auxiliary connector such that different components of the switching gear can be tested.

With a typical draw-out switch, the switch is partially pulled out of the cabinet such that the draw-out switch is disconnected from the busbars and the switching gear can be tested. In this test position the switching gear is connected to or still connected to an auxiliary connector for testing the switch gear.

The draw-out switch is pulled out further to truly disconnect the switching gear. In this position the draw-out switching device can be removed safely.

Known draw-out switching devices are manually operated to position them in the desired position. The position is often indicated by marks arranged on the base frame. It is however difficult to position the switching device accurately in the correct position.

Some known draw-out switching devices are provided with a positioning mechanism in which on has to use a ratchet to rotate a screw spindle, which moves the sub-frame with the switching gear. An indicator is arranged with the positioning mechanism for indicating in which position the draw-out switching device is moved. The use of a ratchet to rotate a screw spindle, takes a relative long time for moving the switching device to the desired position.

With the known draw-out switching devices the positions of the sub-frame are located behind each other. The sub-frame has to moved further to reach the following position. In particular when needing to connect auxiliary connectors in the test position, which also need to be connected in the connected position, but need to be unconnected in the disconnected position, a complicated mounting of the auxiliary connector is required.

It is an object of the invention to provide a draw-out switching device according to the preamble, in which the disadvantages of the prior art art reduced or even removed.

This object is achieved according to the invention with a draw-out switching device according to the preamble, which is **characterized in that** the subframe comprises at least two subframe parts, which are movable relative to each other and; and further comprising an operating mechanism for moving the at least two subframe parts one after the other, to arrive at the connected postion, the test position and the disconnected position.

With the draw-out switching device according to the invention it is possible to arrive from the disconnected position in the test position and the connected position, by moving the two sub-frame parts one after the other. So, the sub-frame no longer has to move between three positions. Each sub-frame part moves between two common end stops, such that three different positions of the sub-frame parts can be defined.

Both sub-frame parts at the first end stop, defines the disconnected position, the first sub-frame being moved to the second end stop defines the test position, while also the second sub-frame moved to the second end stop defines the connected position.

A preferred embodiment of the draw-out switching device according to the invention comprises a auxiliary connector having two parts, wherein one part is arranged to the sub-frame and the other part is arranged to a first sub-frame part.

So, when the first sub-frame part is moved the connector parts will connect. The second sub-frame part can then be moved independently, such that the sub-frame can be arranged in the connect position, without having to move the auxiliary connector or without to have to compensate the movement for the auxiliary connector.

Another preferred embodiment of the invention comprises feeder contacts and outgoing contacts connected to the switching gear and arranged on the second sub-frame part.

By arranging feeder contacts and outgoing contacts on the second sub-frame part, it is possible to move these contacts independently of the movement for the test position. So, when moving the first sub-frame part to arrive at the test position, the second sub-frame part and thus the contacts stay stationary.

In yet another preferred embodiment of the draw-out switching device according to the invention the operating mechanism comprises:
- a lever rotatingly arranged to the base frame and having a cam arranged on a free end,
- a first curved slot arranged in the first sub-frame part; and
- a second curved slot arranged in the second sub-frame part, wherein the cam extends through both the first and second curved slot.

An economic and cost effective mechanism is obtained by using a lever with cam and curved slots in the sub-frame parts. The lever could be telescopic, such that the lever can be retracted when the mechanism is to be operated.

Preferably, the second curved slot is substantially L-shaped, wherein one leg of the L-shaped slot is substantially tangential to the path of the cam.

This ensures that the sub-frame part will not move, when the cam is moved along the one leg, but that the sub-frame part will move as soon as the cam enters the other leg of the L-shaped slot.

Further preferred is a draw-out switching device, wherein the first slot is elongate and substantially tangential to the path of the cam.

In still a further preferred embodiment of the draw-out switching device according to the invention the angle between the one leg of the L-shaped slot and the elongate slot is between 30° and 50°.

These and other features of the invention will be elucidated in conjunction with the accompanying drawings.
Figure 1 shows a perspective view of an embodiment of a draw-out switching device according to the invention in a connected position.
Figure 2 shows a perspective view of the embodiment of figure 1 in disconnected position.
Figure 3 shows a perspective view of the embodiment of figure 1 in test position.
Figures 4 - 6 show the operating mechanism of the embodiment of figure 1.

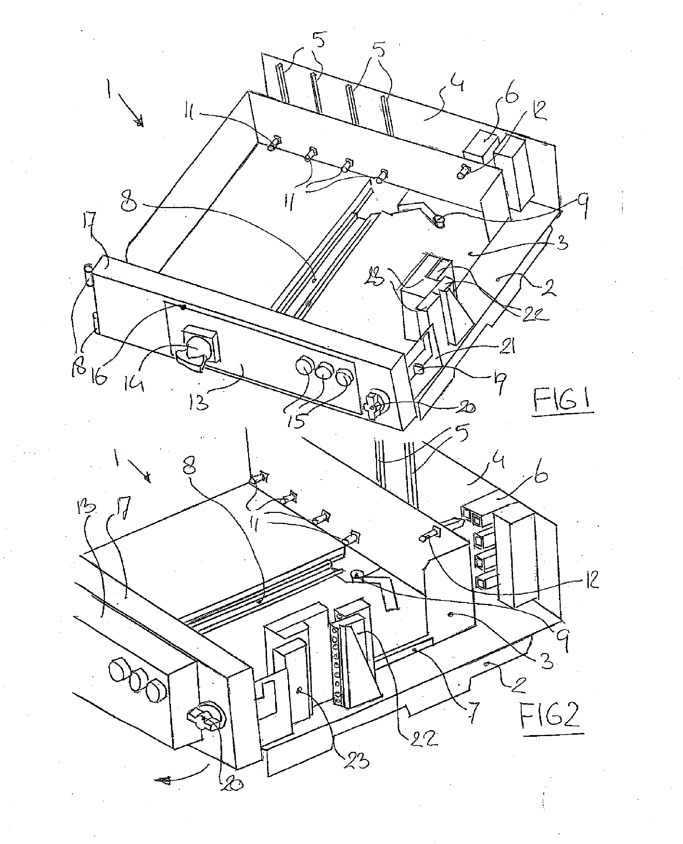

Figure 1 shows an embodiment of a draw-out switching device 1 according to the invention. The switching device 1 has a base frame 2 on which a sub-frame 3 is slidably arranged.

The base frame 2 is preferably arranged in a cabinet with a back wall 4. This back wall 4 has busbars 5 for supply of power and connection blocks 6 to which for example a pump or electric motor is connected.

The sub-frame 3 has a first sub-frame part 7 and the second sub-frame part 3. Both sub-frame parts 3 and 7 are guided along a guide rail 8, which is attached to the base frame 2. A cam 9 arranged on a lever (not shown) is used to control the movement of both sub-frame parts 3 and 7.

At the back of sub-frame 3, 7 a wall 10 is arranged with feeder contacts 11 and outgoing contacts 12. In the connected position as shown in figure 1, the feeder contacts 11 are in contact with the busbars 5, while the outgoing contact 12 is connected to the connection block 6. Switching gear (not shown) is connected to the feeder contacts 11 and the outgoing contacts 12 to switch power to the outgoing contact 12.

The front of the sub-frame 3, 7 has an extension part 13 with a switch 14 and control lights 15. This extension part 13 protrudes through an opening 16 in a door 17, which is arranged by hinges 18 to the base frame 2.

The door 17 has a latch 19 with an operating knob 20. The latch 19 interacts with a secondary latch 21, which prevents the first sub-frame part 7 and the second sub-frame part 3 from moving out of the disconnected position, when the door 17 is not closed and not locked.

An auxiliary connector 22, 23 is arranged with one part 22 to the base frame 2 and with the other part 23 to the sub-frame part 7.

Figure 2 shows the device 1 of figure 1 in disconnected position. The feeder contacts 11 are disconnected from the busbars 5 and the outgoing contact 12 is disconnected from the connection block 6. Also the auxiliary connector 22, 23 is apart.

This disconnected position is achieved by movement of the cam 9 as a result of which both sub-frame parts 3, 7 have been moved relative to the base frame 2. The extension part 13 now protrudes further through the door 17 and also only in this disconnected position, the latch 19, 20 can be unlocked such that the door 17 can be opened and the device can be fully removed.

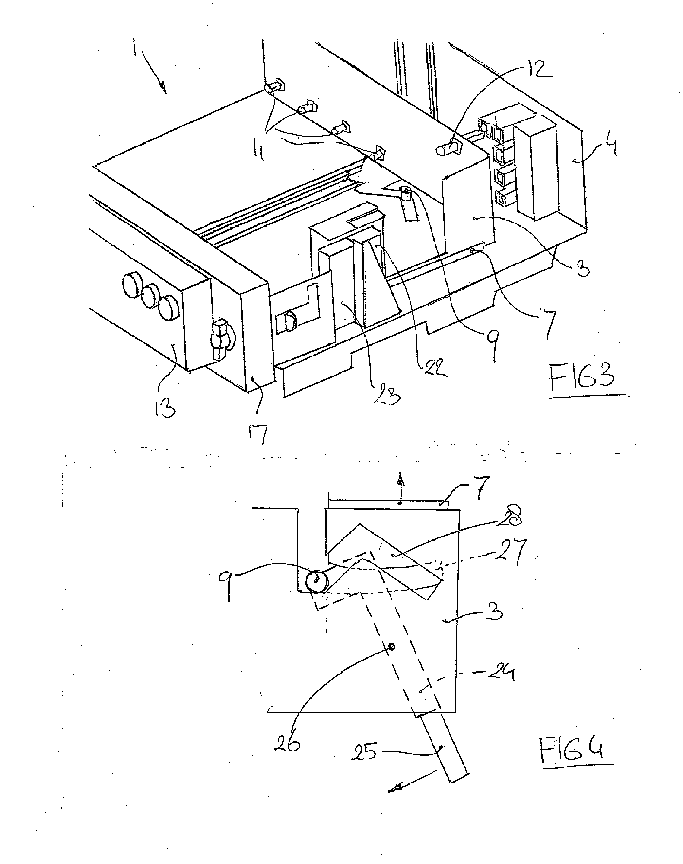

Figure 3 shows the device 1 in the test position. By movement of the cam 9 only the sub-frame part 7 has been moved to the back wall 4 of the cabinet. As the auxiliary contacts 23 are attached to the sub-frame part 7, these contacts 23 have been brought into contact with the auxiliary contacts 22, which are arranged on the base 2.

Note that the second sub-frame part 3 was not moved by the movement of the cam 9 (compared to the disconnected position as shown in figure 2). So, the feeder contacts 11 and outgoing contacts 12 are still disconnected. Also, the extension part 13 is still protruding through the door 17, indicating that the draw-out switching device 1 is not in the connected position.

Figure 4 shows the cam 9 and the first sub-frame part 7 and the second sub-frame part 3 in top view. The cam 9 is arranged to the free end of a lever 24 having a withdrawable lever part 25 to extend the lever 24. The lever 24 rotates along a rotation axle 26, with is mounted to the base frame.

The first sub-frame part 7 is provided with an elongate slot 27, while the second sub-frame part 3 is provided with an L-shaped slot 28.

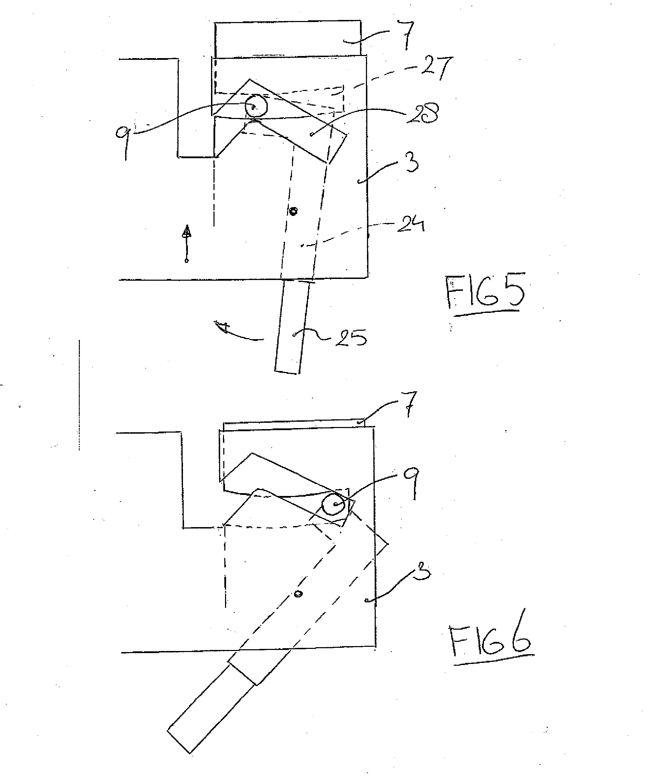

Figure 4 shows the disconnected position of the device 1. When the lever 24 is moved clockwise, the cam 9 will follow the first leg of the L-shaped slot 28, such that the second sub-frame part 3 stays in position, while the cam 9 will push against the side of the elongate slot 27 such that the first sub-frame part 7 is moved to the position as shown in figure 5.

Figure 5 shows the test position of the device 1. When the lever 24 is moved further, the cam 9 will start to follow the elongate slot 27 due to the orientation of the elongate slot 27.

The cam 9 will now push against the side of the second leg of the L-shaped slot 28 in the second sub-frame part, causing it to move to the connected position shown in figure 6.

With this operating mechanism of the device 1 according the invention, it is possible to move two sub-frame parts independent from each other to arrive at either the disconnected position, the test position or the connected position.

## Claims

1. Drawout switching device comprising:
- a base frame for arrangement in a cabinet;
- a subframe slidable arranged in the base frame and housing switching gear; wherein the subframe is positionable in at least a connected position, a test position and a disconnected position, **characterized in that**
- the subframe comprises at least two subframe parts, which are movable relative to each other and;
- further comprising an operating mechanism for moving the at least two subframe parts one after the other, to arrive at the connected position, the test position and the disconnected position.

2. Drawout switching device according to claim 1, comprising a auxilliary connector having two parts, wherein one part is arranged to the subframe and the other part is arranged to a first subframe part.

3. Drawout switching device according to claim 1 or 2, comprising feeder contacts and outgoing contacts connected to the switching gear and arranged on the second subframe part.

4. Drawout switching device according to any of the preceding claims, wherein the operating mechanism comprises:
- a lever rotatingly arranged to the base frame and having a cam arranged on a free end,
- a first curved slot arranged in the first subframe part; and
- a second curved slot arranged in the second subframe part, wherein the cam extends through both the first and second curved slot.

5. Drawout switching device according to claim 4, wherein the second curved slot is substantially L-shaped, wherein one leg of the L-shaped slot is substantially tangential to the path of the cam.

6. Drawout switching device according to claim 4 or 5, wherein the first slot is elongate and substantially tangential to the path of the cam.

7. Drawout switching device according to claim 5 and 6, wherein the angle between the one leg of the L-shaped slot and the elongate slot is between 30° and 50°.
